# EUROPÄISCHE PATENTANMELDUNG

(11) **EP 3 744 693 A1**
(43) Veröffentlichungstag der Anmeldung: **02.12.2020**
(21) Anmeldenummer: 19177670.7
(22) Anmeldetag: 31.05.2019
(51) Int. Cl.: C02F 1/68, E04H 4/12

(54) **WASSERBEHÄLTERPFLEGEGERÄT**

(71) Anmelder: Franz, Heinz-Günther, 22307 Hamburg (DE)
(72) Erfinder: Franz, Heinz-Günther, 22307 Hamburg (DE)
(74) Vertreter: Patentanwälte Geyer, Fehners & Partner mbB

(57) **Zusammenfassung**

Es wird eine Vorrichtung zur Dosierung mindestens einer Wassergütechemikalie in einen Wasserbehälter (1) bereitgestellt. Die Vorrichtung weist eine Dosierleitung (14) mit einem Ausflussende (16), eine Dosiereinheit (13) zur Dosierung der Wassergütechemikalie durch die Dosierleitung (14) und eine Regeleinheit (12), welche mit dem Wassergütesensor (10) verbunden ist und die Dosiereinheit (13) ansteuert, auf, wobei die Dosiereinheit (13) und die Regeleinheit (12) in ein Gehäuse (19) aufgenommen sind und ein Vorrat (17) im Gehäuse (19) aufnehmbar oder daran anschließbar ist und ein Träger (9a; 9b; 24), an welchem ein Wassergütesensor (10) und ein Ausflussende (16) der Dosierleitung (14) befestigt sind zum Einsetzen in den Wasserbehälter (1) derart ausgebildet ist, dass das Ausflussende (16) der Dosierleitung (14) stromabwärts des Wassergütesensors (10) zum Liegen kommt.

## Beschreibung

Die vorliegende Erfindung betrifft eine Vorrichtung zur Dosierung mindestens einer Wassergütechemikalie in einen Wasserbehälter, wobei die Vorrichtung mindestens einen Wassergütesensor, eine Dosierleitung mit einem Ausflussende, eine Dosiereinheit zur Dosierung der Wassergütechemikalie durch die Dosierleitung und eine Regeleinheit, die mit dem Wassergütesensor verbunden ist und die Dosiereinheit ansteuert, aufweist.

Eine solche Vorrichtung ist aus DE 10138384 A1 bereits bekannt. DE 10138384 A1 beschreibt eine Vorrichtung zur Desinfektion und Keimfreihaltung von Mischwasser in einem Wasserbehälter innerhalb eines Umwälzkreislaufes. Als Mischwasser wird hierbei Wasser bezeichnet, welches aus Überlaufwasser (verunreinigtes Beckenwasser, welches aus einem Becken über eine Überlaufrinne in einen Wasserbehälter gelangt) und Füllwasser (Frischwasser aus der zentralen Trinkwasserversorgung) besteht. Dieses Mischwasser wird von einer Umwälzpumpe in eine Wasseraufbereitungsanlage gepumpt, wo es gefiltert und anschließend von der Umwälzpumpe wieder zurück in den Wasserbehälter gepumpt wird. In einem derartigen Umwälzkreislauf strömt das verunreinigte Beckenwasser über die Überlaufrinne aus dem Becken in einen Wasserbehälter, wo es zusammen mit Füllwasser zu Mischwasser vermischt wird. Von dort wird es von der Umwälzpumpe durch die genannte Wasseraufbereitungsanlage gepumpt und dabei gefiltert. Beim Ausfluss aus der Wasseraufbereitungsanlage werden wesentliche Wasserkennwerte, wie pH-Wert, Chlorgehalt, Nitratgehalt, Phosphatgehalt (,...) von einem Wassergütesensor ermittelt und basierend auf den jeweiligen gemessenen Werten eine oder mehrere Wassergütechemikalien wie z.B. Chlor (Cl⁻), Nitrate (NO₃⁻), Phosphate (PO₄³⁻) (,...) über eine Dosierleitung mit einem Ausflussende in einem Leitungssystem zugeführt. Der Wassergütesensor ermittelt die notwendige Menge der jeweiligen Wassergütechemikalie. Dieser Wassergütesensor befindet sich im Leitungssystem und ist stromabwärts der Wasseraufbereitungsanlage positioniert. Der Wassergütesensor misst die Wasserkennwerte des ihn umgebenden Wassers und übermittelt die gemessenen Werte über elektrische Leitungen an eine Regeleinheit. Die Regeleinheit verarbeitet die gemessenen Werte des Wassergütesensors und steuert eine Dosiereinheit an. Der durch die Regeleinheit ermittelte Bedarf der jeweiligen Wassergütechemikalie wird anschließend über die Dosiereinheit mit anschließender Dosierleitung und einem Ausflussende, stromabwärts des Wassergütesensors gelegen, in das durch das Leitungssystem strömende und in der Wasseraufbereitungsanlage gefilterte Mischwasser eingebracht und von einem Reaktionsmischer mit diesem vermischt.

Abschließend pumpt die Umwälzpumpe das Wasser wieder zurück in den Wasserbehälter, wodurch der beschriebene Umwälzkreislauf geschlossen ist. In der Anordnung aus DE 10138384 A1 wird die Durchmischung des Mischwassers mit der zugeführten Wassergütechemikalie von einem Reaktionsmischer realisiert. Allerdings resultiert eine Durchmischung von Mischwasser und Wassergütechemikalie im Leitungssystem keinesfalls in einer gleichmäßigen Verteilung der Wassergütechemikalie im gesamten Wasserbehälter. Zudem beschreibt die genannte Druckschrift ein fest montiertes Rohrleitungssystem, welches aufwändig an den Wasserbehälter angebracht werden muss. Einmal an einem Wasserbehälter montiert, kann es nicht mehr, oder nur mit großen Mühen verbunden an einem anderen Wasserbehälter-Modell genutzt werden.

In DE 10029568 A1 wird ebenfalls der Wasseraufbereitungsvorgang in einem Wasserbehälter, sowie eine Mess- und Regeleinheit zur Sicherstellung der Wasserqualität beschrieben. Der Umwälzvorgang läuft auf dieselbe Art und Weise ab, wie es in DE 10138384 A1 beschrieben steht. Mit dem einzigen Unterschied, dass die Mess- und Regeleinheit in DE 10029568 A1 vom Umwälzkreislauf beabstandet ist. Der Bedarf an der jeweiligen Wassergütechemikalie (Cl⁻, NO₃⁻, PO₄³⁻,...) wird nicht direkt am Mischwasser im Leitungssystem des Umwälzkreislaufs gemessen. Es befindet sich stattdessen ein separater Abfluss im Wasserbehälter, durch welchen verunreinigtes Beckenwasser abgeführt und untersucht wird. Das durch den Abfluss zum Messen der Wasserkennwerte (pH-Wert, Chlorgehalt, Nitratgehalt, Phosphatgehalt,...) abgeführte Wasser, wird als Messwasser bezeichnet. In der vom Umwälzkreislauf beabstandeten Messeinheit messen Wassergütesensoren die genannten Wasserkennwerte und ermitteln den Bedarf der jeweiligen Wassergütechemikalie. Dieser Bedarf der jeweiligen Wassergütechemikalie wird von elektrischen Leitungen an eine Regeleinheit übertragen. Die Regeleinheit speichert die Sollwerte für die optimale Wasserqualität, sowie die Messwerte aus den Messungen der Wassergütesensoren. Anschließend ermitteln Vergleicher und Prozessoren Regelgrößen, welche die Menge zur Dosierung der jeweils benötigten Wassergütechemikalie durch das Ausflussende der Dosierleitung zum Mischwasser aus dem Wasserbehälter bestimmen. Die räumliche Trennung von Mess- und Regeleinheit und Umwälzkreislauf erhöht das Risiko einer fehlerhaften Dosierung der jeweiligen Wassergütechemikalie über die Dosiereinheit durch das Ausflussende der Dosierleitung. Das Messwasser, welches über den Abfluss die Wassergütesensoren durchströmt, kann potentiell bei nicht ausreichender Durchmischung des Wassers im Becken eine andere Wasserqualität aufweisen, als das verunreinigte Beckenwasser, welches über die Überlaufrinne in den Wasserbehälter und damit in den Umwälzkreislauf gelangt. Zudem wird in der Messeinheit das beschriebene Messwasser durch den Wassergütesensor gemessen und nicht das im Wasserbehälter erzeugte Mischwasser, zu welchem die Wassergütechemikalie über das Ausflussende der Dosierleitung zugeführt wird. Auch der Unterschied in der Wasserqualität von Mess- und Mischwasser erhöht das Risiko einer fehlerhaften Eindosierung der jeweiligen Wassergütechemikalie. Eine fehlende Verbindung von Messeinheit und Dosiereinheit erfordert zudem eine manuelle Eingabe der benötigten Menge der Wassergütechemikalie, was zum einen den Aufwand beim Nutzer erhöht, zum anderen wiederum die Fehleranfälligkeit bei der Eindosierung der Wassergütechemikalie steigert. Zudem resultiert aus dem zusätzlich angebrachten Mess- und Regelkreislauf ein erhöhter Platzbedarf zur Verlegung von Rohrleitungen und elektrischen Leitungen zusätzlich zu den Rohren des Umwälzkreislaufs.

Ausgehend hiervon soll eine zuverlässige und zugleich vereinfachte Vorrichtung zur Optimierung des Wassers in einem Wasserbehälter bereitgestellt werden.

Die Erfindung ist in Anspruch 1 definiert. Vorteilhafte Weiterbildungen sind in den abhängigen Ansprüchen angegeben.

Die Vorrichtung weist einen Wassergütesensor auf, welcher an einem Träger befestigt ist und mit diesem in einen Wasserbehälter eingebracht werden kann. Der Wassergütesensor wird von Wasser, welches sich in dem Wasserbehälter befindet umströmt und misst dabei mindestens einen wesentlichen Wasserkennwert (pH-Wert, Chlorgehalt, Nitratgehalt, Phosphatgehalt,...). Im Folgenden wird stets von einem Wassergütesensor gesprochen. Dieser kann jedoch neben der Ausführung als Multisensor auch als Sensorbündel zur Messung mehrerer unterschiedlicher Wasserkennwerte ausgebildet sein.

Zusätzlich zum Wassergütesensor ist am Träger der Vorrichtung eine Dosierleitung befestigt, sodass ein Ausflussende der Dosierleitung stromabwärts des Wassergütesensors zu liegen kommt. Die Dosierleitung ermöglicht eine Einbringung einer oder mehrerer Wassergütechemikalien in das Wasser im Wasserbehälter über das Ausflussende. Diese Chemikalie(n) beeinflusst/beeinflussen mindestens einen Wasserkennwert.

Das andere Ende der Dosierleitung ist mit einer Dosiereinheit verbunden, welche über elektrische Leitungen direkt mit einer Regeleinheit verbunden ist. Mit dieser Regeleinheit ist in der Vorrichtung ebenfalls der Wassergütesensor über elektrische Leitungen verbunden.

Während des Umwälzvorgangs in dem gesamten Wasserbehälter saugt eine Umwälzpumpe das Wasser aus dem Wasserbehälter ab, bevor es gefiltert und abschließend von der Umwälzpumpe wieder zurück in den Wasserbehälter gepumpt wird. Durch den beschriebenen Umwälzkreislauf wird im Wasserbehälter eine Strömungsrichtung festgelegt.

Der Wassergütesensor ermittelt mindestens einen wesentlichen Wasserkennwert des ihn umströmenden Wassers im Wasserbehälter. Die gemessenen Daten werden über elektrische Leitungen an die Regeleinheit übertragen. Die Regeleinheit ermittelt aus dem mindestens einen Wasserkennwert den Bedarf an der mindestens einen Wassergütechemikalie. Diese Wassergütechemikalie sorgt dafür, dass die geforderte Wasserqualität im Wasserbehälter erzeugt werden kann.

Ist der Bedarf der jeweiligen Wassergütechemikalie von der Regeleinheit ermittelt, steuert diese über elektrische Leitungen die Dosiereinheit an. Von der Dosiereinheit wird der Bedarf der jeweiligen Wassergütechemikalie empfangen und anschließend die benötigte Menge über die Dosierleitung mit dem Ausflussende stromabwärts des Wassergütesensors in das Wasser im Wasserbehälter eingebracht.

Der Träger kann fest oder lösbar im Wasserbehälter montiert sein. Bevorzugt ist er lösbar mit einem Teil des Wasserbehälters verbunden, sodass der Träger zur Reinhaltung des Wassers im Wasserbehälter eingebracht, ebenso aber auch aus diesem wieder entfernt werden kann. Ideal zur Positionierung des Trägers ist ein Übergang von einem Hauptteil des Wasserbehälters in einen Absaugbereich, aus welchem Wasser mit der genannten Umwälzpumpe abgepumpt wird.

Weiter weist die Vorrichtung ein Gehäuse auf, in welchem die Dosiereinheit und die Regeleinheit aufgenommen sind. Zudem kann ein Vorrat für eine oder mehrere Wassergütechemikalien im Gehäuse aufgenommen oder zur kompakteren Gestaltung der Vorrichtung an das Gehäuse angeschlossen werden, wobei eine Verbindung vom Vorrat zur Dosiereinheit durch das Gehäuse vorgesehen ist.

Der wesentliche Vorteil der Vorrichtung liegt darin, dass der Träger lösbar im Wasserbehälter positioniert ist und so nur temporär zur Wasserkonditionierung in den Wasserbehälter eingebracht werden muss. Die Vorrichtung ist bevorzugt nicht fest am Wasserbehälter installiert. Gefördert wird dieser Vorteil durch das Gehäuse, welches einen einfachen Transport der Regeleinheit, der Dosiereinheit und des Vorrats ermöglicht. Durch die Option einer lösbaren Verbindung zwischen Vorrat und Gehäuse wird die Portabilität zusätzlich erhöht und eine kompakte Gestaltung des Gehäuses, unabhängig von der Menge der jeweiligen Wassergütechemikalie im Vorrat, ermöglicht.

Wassergütesensor und Dosierleitung sind am Träger fixiert und können damit in den Wasserbehälter eingebracht werden. Dies bietet zwei wesentliche Vorteile. Durch die Fixierung am Träger kann der Träger, an dem Wassergütesensor und Ausflussende der Dosierleitung befestigt sind, so in den Wasserbehälter eingebracht werden, dass das Ausflussende der Dosierleitung stromabwärts des Wassergütesensors liegt. Dies sorgt dafür, dass beim Dosieren der Wassergütechemikalie über die Dosierleitung in das Wasser im Wasserbehälter, die frisch eingebrachte Wassergütechemikalie in keinem Fall mit dem Wassergütesensor in Verbindung kommen und so die Messergebnisse verfälschen kann. Ist in einer idealen Ausführungsform des Wasserbehälters dieser in einen Hauptteil und einen verhältnismäßig kleinen Absaugbereich unterteilt, wird die Vorrichtung wie bereits beschrieben im Übergangsbereich zwischen diesen beiden Bereichen eingesetzt. Aus dem verhältnismäßig kleinen Absaugbereich wird das Wasser schneller abgesaugt (im Vergleich zu einem größeren Teil des Wasserbehälters), wodurch die Gefahr der Beeinträchtigung der Messergebnisse durch die zugeführte Wassergütechemikalie weiter reduziert wird. Außerdem wird eine sehr schnelle Durchmischung von frisch zugesetzter Wassergütechemikalie und Wasser im Wasserbehälter ermöglicht.

Der Träger kann in einer bevorzugten Ausführungsform als Rohr mit Öffnungen ausgeführt sein, wodurch eine Anbringung der Dosierleitung und des Wassergütesensors im Inneren des Rohres ermöglicht wird. Dadurch werden zum einen der Durchfluss und die damit verbundene Umströmung des Wassergütesensors sichergestellt, zum anderen sind die Komponenten durch die Positionierung im Inneren des Rohres durch Einflüsse von außen besser geschützt.

In einer weiteren bevorzugten Ausführungsform ist der Träger als Rohr mit einem obenliegenden Einlass und einem untenliegenden Auslass ausgeführt. Auch dadurch werden der Durchfluss und die damit verbundene Umströmung des Wassergütesensors sichergestellt. Zudem wird eine Durchflussrichtung des Wassers aus dem Wasserbehälter vorgegeben.

Der Träger kann in einer weiteren Ausführungsform mit einer Befestigungseinrichtung versehen sein. Diese Befestigungseinrichtung ermöglicht es, den Träger dauerhaft oder lösbar im Wasserbehälter zu befestigen. Eine solche Befestigungseinrichtung ist in unterschiedlichen Ausführungsformen mit Magneten, einer Klettverbindung, einem Saugnapf, Zapfen, oder einer mechanischen Arretierung realisiert. Durch eine derartige Befestigung des Trägers im Wasserbehälter wird ein Verrutschen des Trägers vermieden und eine lösbare Befestigung des Trägers samt Wassergütesensor und Ausflussende der Dosierleitung ermöglicht. Durch das Vermeiden des Verrutschens des Trägers wird verhindert, dass sich die eingegebene Wassergütechemikalie direkt an den Wassergütesensor legt und dadurch die Messwerte verfälscht. Die Portabilität der Vorrichtung bleibt dadurch unbeeinflusst.

In einer bevorzugten Ausführungsform weist die Vorrichtung eine Sammelleitung auf, in welcher die elektrische Leitung vom Wassergütesensor zur Regeleinheit und die Dosierleitung vom am Träger fixierten Ausflussende bis zur Dosiereinheit zusammengefasst sind. Diese Sammelleitung kann in einer weiteren Ausführungsform mit Hilfe einer Steckverbindung am Gehäuse mit der darin befindlichen Regel- bzw. Dosiereinheit verbunden werden. Dadurch wird die Komplexität bei der Montage reduziert und der Transport der Vorrichtung erleichtert.

Zudem sind in einer weiteren Ausführungsform der Vorrichtung eine Anzeige und eine Eingabeeinrichtung, insbesondere ein Startknopf am Gehäuse angebracht. Dadurch wird es dem Nutzer erlaubt, den gesamten Prozess der Messung der Wasserqualität und des Einbringens der Wassergütechemikalie zu überwachen und gegebenenfalls einzugreifen, indem er einzustellende Werte oder Wertebereiche vorgeben kann. Eine weitere Verbesserung ist die Verwendung einer App, um mit Hilfe einer Funkverbindung zu einem portablen Datengerät, z. B. ein Mobiltelefon oder ein Datenpad, die einzustellenden Werte oder Wertebereiche vorzugeben oder zu überwachen.

Die Erfindung wird nachfolgend unter Bezugnahme auf die Zeichnung beispielhalber noch näher erläutert. In der Zeichnung zeigt:
- Fig. 1: einen Umwälzvorgang in einem Wasserbehälter nach dem Stand der Technik,
- Fig. 2: ein Schema der Vorrichtung,
- Fig. 3: eine Möglichkeit zur Befestigung eines als Strömungsrohr der Vorrichtung ausgebildeten Trägers an einer Überströmwand des Wasserbehälters,
- Fig. 4: das Strömungsrohr gerade ausgeführt und
- Fig. 5: den Träger als Halter ausgeführt.

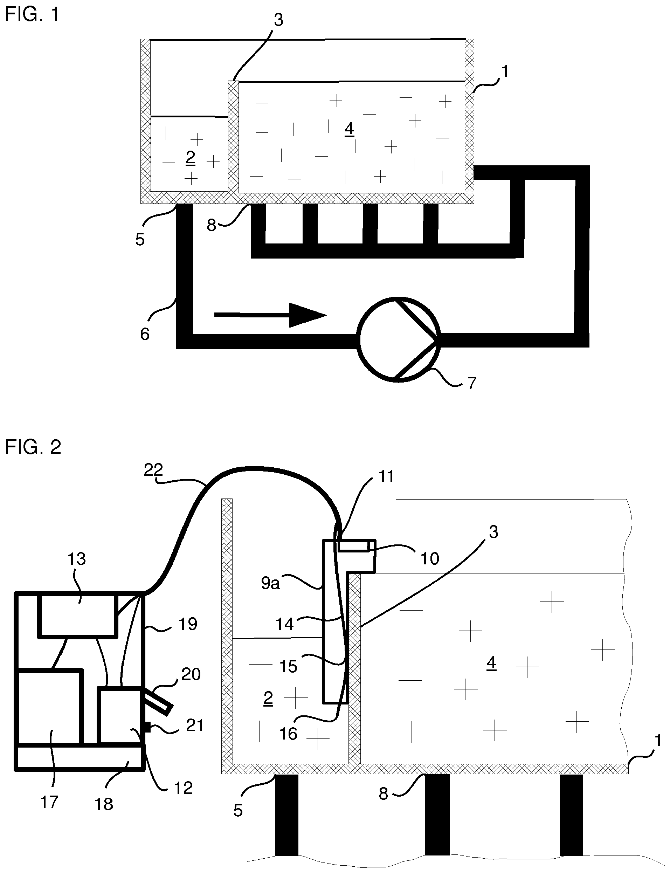

In Fig. 1 ist schematisch ein Umwälzvorgang in einem Wasserbehälter 1 gezeigt. In dem Wasserbehälter 1 befindet sich Wasser. Das Wasser in einem Absaugbereich 2 ist durch eine Überströmwand 3 vom Wasser in einem Hauptteil 4 abgetrennt. Das Wasser aus dem genannten Absaugbereich ist über eine Ansaugöffnung 5 und ein Leitungssystem 6 mit einer Pumpe 7 verbunden. Auslassdüsen 8 verbinden das Leitungssystem 6 wiederum mit dem Hauptteil 4 des Wasserbehälters 1.

Wenn der Wasserbehälter 1 im Vollbetrieb läuft, ist die Pumpe 7 eingeschaltet. Dabei wälzt die Pumpe 7 das gesamte Wasser in relativ kurzer Zeit, z. B. innerhalb einer Minute über die Ansaugöffnung 5 und die Auslassdüsen 8 um. Die Aktivierung der Pumpe 7 bewirkt ein Strömen des Wassers über die Überströmwand 3 in den Absaugbereich 2. Aus dem Absaugbereich 2 saugt die Pumpe 7 das Wasser durch die Ansaugöffnung 5 in das Leitungssystem 6. Von dort pumpt es die Pumpe 7 durch die Auslassdüsen 8 wieder in den Hauptteil 4 zu dem übrigen Wasser. Es sei angemerkt, dass die Bauweise des Wasserbehälters 1 rein exemplarisch ist. Die Pumpe 7 pumpt Wasser aus dem Absaugbereich 2 zum Umwälzen ab. Die konkrete Zuführung des Wassers zum Absaugbereich 2, insbesondere die Aufteilung in Hauptteil 4 und Absaugbereich 2 durch die Überströmwand 3 ist optional.

In Fig. 2 sind der Absaugbereich 2 und die Überströmwand 3 vergrößert dargestellt, mit einer schematischen Darstellung einer Vorrichtung zur Dosierung einer Wassergütechemikalie. Ein gewinkeltes Strömungsrohr 9a ist an der Überströmwand 3 lösbar fixiert. Das gewinkelte Strömungsrohr 9a fungiert als Träger für mind. einen Wassergütesensor 10, welcher im Rohr aufgenommen und über eine elektrische Leitung 11 oder per Funk mit einer Regeleinheit 12 verbunden ist. Dieser Wassergütesensor misst mindestens einen bestimmten Wasserkennwert (pH-Wert, Chlorgehalt, Nitratgehalt, Phosphatgehalt,...), um an die Regeleinheit 12 den Bedarf mindestens einer Wassergütechemikalie zu übermitteln. Die Regeleinheit 12 steuert eine Dosiereinheit 13 an. Im gewinkelten Strömungsrohr 9a befindet sich weiter eine mit der Dosiereinheit 13 verbundene Dosierleitung 14, welche mit einer Fixierung 15 so am gewinkelten Strömungsrohr 9a befestigt ist, dass das Ausflussende 16 der Dosierleitung 14 fest beabstandet zum Wassergütesensor 10 liegt. Die Dosierleitung 14 ist mit der Dosiereinheit 13 verbunden, welche über eine nicht näher bezeichnete elektrische Leitung oder per Funk mit der Regeleinheit 12 und einer nicht näher bezeichneten Fluidleitung mit einem Vorrat 17 für die einzelnen Wassergütechemikalien verbunden ist. Regeleinheit 12, Dosiereinheit 13, Vorrat 17 mit den darin befindlichen Wassergütechemikalien und ein Akku 18 befinden sich in einem Gehäuse 19. Zudem sind am Gehäuse eine Anzeige 20 und eine Eingabevorrichtung, insbesondere mit einem Startknopf 21, oder alternativ eine Funkverbindung zu einem externen Datengerät, z. B. Mobiltelefon oder Datenpad, vorgesehen.

Das Wasser strömt während des Umwälzvorgangs auch durch das gewinkelte Strömungsrohr 9a und kommt dabei mit dem darin befindlichen Wassergütesensor 10 in Berührung. Der Wassergütesensor 10 wird umströmt und übermittelt von ihm gemessene Wasserkennwerte über die elektrische Leitung 11 an die Regeleinheit 12. Die Regeleinheit 12 regelt an der Dosiereinheit 13 eine Zugabe der Wassergütechemikalie über die Dosierleitung 14 aus deren stromabwärts des Wassergütesensors 10 gelegenem Ausflussende 16. Die Stromversorgung der Regeleinheit und der Dosiereinheit wird über einen Akku 18 oder per Hausnetzanschluss sichergestellt. Die Vorrichtung ist portabel ausgeführt; Regeleinheit 12, Dosiereinheit 13 und Akku 18 (soweit vorhanden) befinden sich in einem Gehäuse 19, welches über eine optionale Steckverbindung mit dem gewinkelten Strömungsrohr 9a verbunden ist und dadurch auch von diesem gelöst werden kann. Durch die Anzeige 20 und die Eingabevorrichtung mit Startknopf 21 ist es dem Nutzer möglich, aktiv in den Prozess einzugreifen.

Die Dosierleitung 14 und die elektrische Leitung 11 vom Wassergütesensor 10 zur Regeleinheit 12 sind optional in einer Sammelleitung 22 zusammengefasst. Die Dosierleitung 14 mit der Fixierung 15 des Ausflussendes 16 am gewinkelten Strömungsrohr 9a stellt sicher, dass der Wassergütechemikalienausfluss immer stromabwärts des Wassergütesensors 10 realisiert wird. Durch die räumliche Trennung von Ausflussende 16 und Wassergütesensor 10, die am in dieser Ausführungsform als Strömungsrohr ausgeführten Träger befestigt sind, kann die eindosierte Wassergütechemikalie nicht sofort mit dem Teil des Wassers, der danach zum Wassergütesensor 10 gelangt, in Berührung kommen. Dies würde die Messwerte verfälschen. Durch die Anordnung des Ausflussendes 16 stromabwärts des Wassergütesensors 10 und die erhöhte Strömungsgeschwindigkeit im Absaugbereich 2 werden kontinuierlich unverfälschte Messdaten erhalten und eine verbesserte Wasserqualität erreicht.

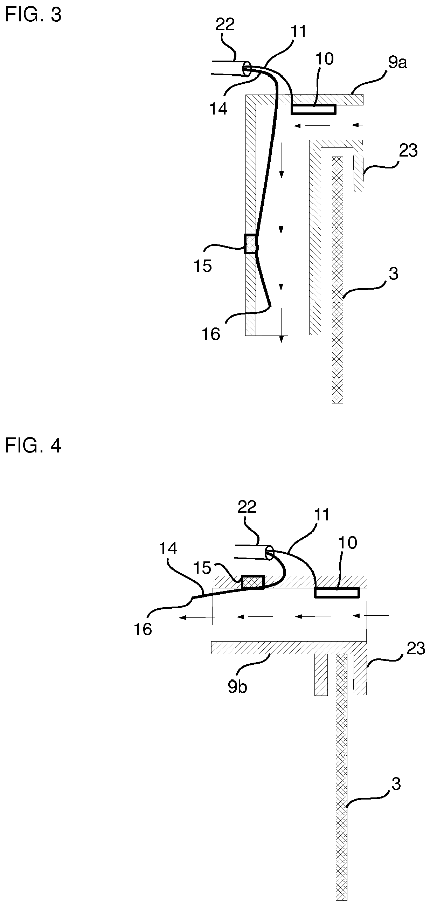

In Fig. 3 ist der Träger in einer weiteren Ausführungsform dargestellt. Er ist hier wiederum als gewinkeltes Strömungsrohr 9a mit einem Überwurf 23 über die Überströmwand 3 des Wasserbehälters 1 zum Absaugbereich 2 gehängt. Das aufgrund des beschriebenen Umwälzvorgangs anströmende Wasser kommt mit dem Wassergütesensor 10 in Berührung, welcher mit der elektrischen Leitung 11 verbunden ist. Diese ist optional in der Sammelleitung 22 mit der Dosierleitung 14, deren Ausflussende 16 stromabwärts des Wassergütesensors 10 liegt, zusammengefasst. Die Position des Ausflussendes 16 stromabwärts des Wassergütesensors 10 wird mittels der Fixierung 15 sichergestellt.

Fig. 3 verdeutlicht auch die Portabilität der Vorrichtung. Der Träger (z.B. in Fig. 3 das gewinkelte Strömungsrohr 9a) ist lösbar im Absaugbereich 2 angebracht, zum Beispiel, wie in Fig. 3 gezeigt, am Überwurf 23 über die Überströmwand 3 gehängt. Dadurch ist eine problemlose Montage und Entnahme des Trägers und damit z. B. eine Verwendung der Vorrichtung an mehreren Wasserbehältern, oder das Anbringen nur in bestimmten Messintervallen (1-mal pro Woche/Monat, etc.) gewährleistet. Der Träger wird bevorzugt nur zur Wasserkonditionierung angebracht und ist bevorzugt nicht dauerhaft installiert. Auch andere Befestigungsmittel sind für die Fixierung möglich, z. B. Magnete, Saugnäpfe, Zapfen, Klettverbindungen oder eine mechanische Arretierung aufweisend.

In Fig. 2 und 3 ist der Träger als gewinkeltes Strömungsrohr 9a ausgeführt. Dies ist aber keinesfalls zwingend erforderlich. Der Träger kann auch anders ausgeführt werden, gemäß Fig. 4 zum Beispiel als gerades Strömungsrohr 9b. Dieses kann an der Überströmwand 3 befestigt werden. Der Wassergütesensor 10 wird auch hier vom Wasser umströmt und sendet die gemessenen Daten über die elektrische Leitung 11 an die Regeleinheit 12. Die Dosierleitung 14 ist am Strömungsrohr 9 befestigt, mit ihrem Ausflussende 16 stromauswärts des Wassergütesensors 10. Dosierleitung 14 und elektrische Leitung 11 sind vorteilhaft in der Sammelleitung 22 zusammengefasst.

Wird der Träger nicht wie in Fig. 2 und 3 gewinkelt, sondern gerade oder anderweitig geometrisch ausgeführt, ändert dies an den übrigen Merkmalen der Vorrichtung nichts. Der Vorgang läuft genau wie in Fig. 2 beschrieben ab. Auch an der Befestigung ändert sich im Vergleich zu einer gewinkelten Ausführung nichts.

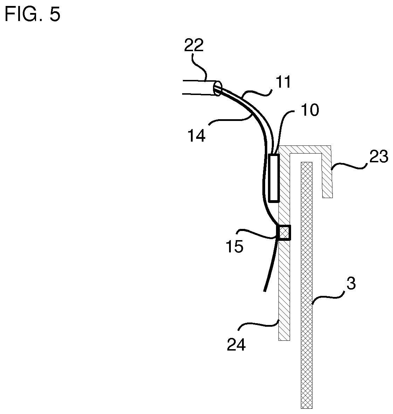

In Fig. 5 ist der Träger nun als stab- oder plattenförmiger Halter 24 ausgeführt. Dieser Halter 24 ist am Überwurf 23 über die Überströmwand 3 zum Absaugbereich 2 gehängt. Das Wasser umströmt hier gleichermaßen den Wassergütesensor 10, welcher die von ihm gemessenen Werte über die elektrische Leitung 11 weitergibt. Die Dosierleitung 14 ist am Halter 24 befestigt, wiederum mit dem Ausflussende 16 stromabwärts des Wassergütesensors 10 liegend. Dosierleitung 14 und elektrische Leitung 11 sind wie in den Fig. 3 und 4 in der Sammelleitung 22 zusammengefasst.

Fig. 5 verdeutlicht, dass ein Strömungsrohr 9a; 9b nicht notwendigerweise gebraucht wird. Ein Halter 24, welcher es ermöglicht, einen Wassergütesensor 10 in die Strömung einzubringen und das Ausflussende 16 der Dosierleitung 14 stromabwärts des Wassergütesensors 10 zu fixieren, reicht aus. Der Halter 24 kann, wie in Fig. 3 und 4 dargelegt, sowohl durch einen Überwurf 23, wie in Fig. 5 explizit dargestellt, als auch durch Magnete, Saugnäpfe, Zapfen, eine Klettverbindung oder mechanische Arretierung befestigt werden.

## Patentansprüche

1. Vorrichtung zur Dosierung mindestens einer Wassergütechemikalie in einen Wasserbehälter (1), wobei die Vorrichtung aufweist:
einen oder mehrere Wassergütesensoren (10),
eine oder mehrere Dosierleitungen (14) mit einem Ausflussende (16),
eine Dosiereinheit (13) zur Dosierung der Wassergütechemikalie durch die Dosierleitung (14),
eine Regeleinheit (12), die mit dem Wassergütesensor (10) verbunden ist und die Dosiereinheit (13) ansteuert,
**dadurch gekennzeichnet, dass** die Vorrichtung weiter aufweist:
ein Gehäuse (19), in dem die Dosiereinheit (13) und die Regeleinheit (12) aufgenommen sind, wobei ein Vorrat (17) für die Wassergütechemikalie im Gehäuse (19) aufnehmbar oder daran anschließbar ist, und
einen Träger (9a; 9b; 24), an welchem der Wassergütesensor (10) und das Ausflussende (16) der Dosierleitung (14) befestigt sind, wobei der Träger (9a; 9b; 24) zum lösbaren Einsetzen in einen Absaugbereich (2) des Wasserspeichers (1) derart ausgebildet ist, dass das Ausflussende (16) der Dosierleitung (14) stromabwärts des Wassergütesensors (10) zum Liegen kommt.

2. Vorrichtung nach Anspruch 1, **dadurch gekennzeichnet, dass** der rohrförmige Träger (9a; 9b) mindestens einen Einlass und einen Auslass umfasst, wobei sich der Wassergütesensor (10) und das Ausflussende (16) zwischen Ein- und Auslass befinden.

3. Vorrichtung nach einem der Ansprüche 1 und 2, **dadurch gekennzeichnet, dass** der Träger (9a; 9b; 24) eine Befestigungseinrichtung zur lösbaren Fixierung an der Überströmwand des Wasserbehälters aufweist.

4. Vorrichtung nach Anspruch 3, **dadurch gekennzeichnet, dass** die Befestigungseinrichtung einen Magneten aufweist.

5. Vorrichtung nach Anspruch 3 und 4, **dadurch gekennzeichnet, dass** die Befestigungseinrichtung eine Klettverbindung aufweist.

6. Vorrichtung nach einem der Ansprüche 3 bis 5, **dadurch gekennzeichnet, dass** die Befestigungseinrichtung einen Saugnapf aufweist.

7. Vorrichtung nach einem der Ansprüche 3 bis 6, **dadurch gekennzeichnet, dass** die Befestigungseinrichtung einen Zapfen aufweist.

8. Vorrichtung nach einem der Ansprüche 3 bis 7, **dadurch gekennzeichnet, dass** die Befestigungseinrichtung eine mechanische Arretierung aufweist.

9. Vorrichtung nach einem der obigen Ansprüche, **gekennzeichnet durch** eine Sammelleitung (22), die die Dosierleitung (14) und die elektrische Leitung (11) des Wassergütesensors (10) zusammenfasst.

10. Vorrichtung nach Anspruch 9, **dadurch gekennzeichnet, dass** an der Sammelleitung (22) eine Steckverbindung zum Gehäuse (19) ausgebildet ist.

11. Vorrichtung nach Anspruch 9 oder 10, **dadurch gekennzeichnet, dass** sich im Gehäuse (19) der Vorrat (17) und das Ende der Sammelleitung (22) befinden.

12. Vorrichtung nach Anspruch 9 oder 10, **dadurch gekennzeichnet, dass** sich der Vorrat (17) außerhalb des Gehäuses (19) befindet und über eine Fluidverbindung mit dem Gehäuse (19) und weiter mit der Dosiereinheit (13) verbunden ist.

13. Vorrichtung nach einem der obigen Ansprüche, **dadurch gekennzeichnet, dass** das Gehäuse (19) eine Anzeige (20) und eine Eingabeeinrichtung, insbesondere einen Startknopf (21) aufweist.

14. Vorrichtung nach einem der obigen Ansprüche, **dadurch gekennzeichnet, dass** die Regeleinheit (12) ein Funkmodul zum Aufbau einer Funkverbindung zu einem externen Datengerät aufweist, um einzustellende Werte oder Wertebereiche vorzugeben und/oder Ist-Werte zu überwachen.

## Geänderte Patentansprüche

### Geänderte Patentansprüche gemäss Regel 137(2) EPÜ.

1. Vorrichtung, ausgebildet zur Dosierung mindestens einer Wassergütechemikalie in einen Wasserbehälter (1), der einen Absaugbereich (2) aufweist, in dem eine Strömungsrichtung besteht, wobei die Vorrichtung aufweist:
einen oder mehrere Wassergütesensoren (10),
eine oder mehrere Dosierleitungen (14) mit einem Ausflussende (16),
eine Dosiereinheit (13) zur Dosierung der Wassergütechemikalie durch die Dosierleitung (14),
eine Regeleinheit (12), die mit dem Wassergütesensor (10) über Funk oder elektrische Leitungen verbunden ist und die Dosiereinheit (13) ansteuert,
**dadurch gekennzeichnet, dass** die Vorrichtung weiter aufweist:
ein Gehäuse (19), in dem die Dosiereinheit (13) und die Regeleinheit (12) aufgenommen sind,
wobei ein Vorrat (17) für die Wassergütechemikalie im Gehäuse (19) aufnehmbar oder daran anschließbar ist, und
einen Träger (9a; 9b; 24), an welchem der Wassergütesensor (10) und räumlich beabstandet dazu das Ausflussende (16) der Dosierleitung (14) befestigt sind, wobei der Träger (9a; 9b; 24) zum lösbaren Einsetzen in den Absaugbereich (2) des Wasserbehälters (1) derart ausgebildet ist, dass das Ausflussende (16) der Dosierleitung (14) stromabwärts des Wassergütesensors (10) zu Liegen kommt.

2. Vorrichtung nach Anspruch 1, **dadurch gekennzeichnet, dass** der rohrförmige Träger (9a; 9b) mindestens einen Einlass und einen Auslass umfasst, wobei sich der Wassergütesensor (10) und das Ausflussende (16) zwischen Ein- und Auslass befinden.

3. Vorrichtung nach einem der Ansprüche 1 und 2, **dadurch gekennzeichnet, dass** der Träger (9a; 9b; 24) eine Befestigungseinrichtung zur lösbaren Fixierung an einer Überströmwand des Wasserbehälters aufweist.

4. Vorrichtung nach Anspruch 3, **dadurch gekennzeichnet, dass** die Befestigungseinrichtung einen Magneten aufweist.

5. Vorrichtung nach Anspruch 3 und 4, **dadurch gekennzeichnet, dass** die Befestigungseinrichtung eine Klettverbindung aufweist.

6. Vorrichtung nach einem der Ansprüche 3 bis 5, **dadurch gekennzeichnet, dass** die Befestigungseinrichtung einen Saugnapf aufweist.

7. Vorrichtung nach einem der Ansprüche 3 bis 6, **dadurch gekennzeichnet, dass** die Befestigungseinrichtung einen Zapfen aufweist.

8. Vorrichtung nach einem der Ansprüche 3 bis 7, **dadurch gekennzeichnet, dass** die Befestigungseinrichtung eine mechanische Arretierung aufweist.

9. Vorrichtung nach einem der obigen Ansprüche, **gekennzeichnet durch** eine Sammelleitung (22), die die Dosierleitung (14) und die elektrische Leitung (11) des Wassergütesensors (10) zusammenfasst.

10. Vorrichtung nach Anspruch 9, **dadurch gekennzeichnet, dass** an der Sammelleitung (22) eine Steckverbindung zum Gehäuse (19) ausgebildet ist.

11. Vorrichtung nach Anspruch 9 oder 10, **dadurch gekennzeichnet, dass** sich im Gehäuse (19) der Vorrat (17) und das Ende der Sammelleitung (22) befinden.

12. Vorrichtung nach Anspruch 9 oder 10, **dadurch gekennzeichnet, dass** sich der Vorrat (17) außerhalb des Gehäuses (19) befindet und über eine Fluidverbindung mit dem Gehäuse (19) und weiter mit der Dosiereinheit (13) verbunden ist.

13. Vorrichtung nach einem der obigen Ansprüche, **dadurch gekennzeichnet, dass** das Gehäuse (19) eine Anzeige (20) und eine Eingabeeinrichtung, insbesondere einen Startknopf (21) aufweist.

14. Vorrichtung nach einem der obigen Ansprüche, **dadurch gekennzeichnet, dass** die Regeleinheit (12) ein Funkmodul zum Aufbau einer Funkverbindung zu einem externen Datengerät aufweist, um einzustellende Werte oder Wertebereiche vorzugeben und/oder Ist-Werte zu überwachen.
